(19) Europäisches Patentamt
European Patent Office
Office européen des brevets

(11) **EP 3 896 665 B1**

(12) **EUROPEAN PATENT SPECIFICATION**

(45) Date of publication and mention
of the grant of the patent:
**26.07.2023 Bulletin 2023/30**

(21) Application number: **21167477.5**

(22) Date of filing: **08.04.2021**

(51) International Patent Classification (IPC):
**G08B 13/24** (2006.01)      **G08B 29/26** (2006.01)

(52) Cooperative Patent Classification (CPC):
**G08B 13/2494; G08B 29/26**

(54) **PRESENCE DETECTION DEVICE AND METHOD, IN PARTICULAR FOR ANTI-INTRUSION SYSTEMS**

VORRICHTUNG UND VERFAHREN ZUR ANWESENHEITSERKENNUNG, INSBESONDERE FÜR EINDRINGSCHUTZSYSTEME

DISPOSITIF ET PROCÉDÉ DE DÉTECTION DE PRÉSENCE, EN PARTICULIER POUR SYSTÈMES ANTI-INTRUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.04.2020 IT 202000007942**

(43) Date of publication of application:
**20.10.2021 Bulletin 2021/42**

(73) Proprietor: **STMicroelectronics S.r.l.**
**20864 Agrate Brianza (MB) (IT)**

(72) Inventors:
• **ALESSI, Enrico Rosario**
  **95127 CATANIA (IT)**
• **PASSANITI, Fabio**
  **96100 SIRACUSA (IT)**

(74) Representative: **Nannucci, Lorenzo et al**
**Studio Torta S.p.A.**
**Via Viotti, 9**
**10121 Torino (IT)**

(56) References cited:
EP-A1- 2 980 609          EP-A1- 3 190 569
KR-A- 20110 061 750      US-A- 4 833 450

**EP 3 896 665 B1**

**Description**

The present solution relates to a presence detection device and method, in particular for anti-intrusion systems or the like.

Presence detection devices are known, used for identifying the presence of individuals in a monitored area, in particular in order to identify intrusions of unauthorized persons and consequently activate alarm signals (it is emphasized that other purposes may, however, be envisaged, for example for applications of energy saving, or of domestic or industrial automation).

Such devices envisage the use of suitable sensors for detecting the presence of individuals in the monitored area.

Known presence sensors include, for example, temperature sensors based on detection of radiation in the infrared (IR) range, of a passive type (the so-called PIR sensors), i.e., ones that react to variations in temperature in the area under surveillance; of an active type, i.e., ones designed to evaluate the interruption of an emitted ray between a point of emission and a point of reception; or of a thermal-image type, i.e., ones designed to detect the so-called thermogram of a subject, i.e., a temperature image or map associated with infrared radiation (IR) emitted by the body of the subject.

Other sensors of a known type include microwave sensors, which usually are used with PIR sensors in so-called "dual-technology" presence detectors. The microwave sensors detect the movement of objects, whereas PIR sensors detect the variation of heat; the combination of the two detections generates an alarm signal.

Known presence detection systems that use appropriate combinations of one or more of the aforesaid sensors, for example a combination of one or more infrared temperature sensors and one or more ultrasound sensors, are, for example, described in US 6,188,318 B1 or in US 2005/231353 A1, the aim being to improve the efficiency of detection and reduce the number of false positives and/or false negatives.

Infrared temperature sensors are moreover known, in particular based on thermopiles, made with integrated technology of semiconductor materials, for example with complementary metal oxide semiconductor (CMOS) technology. These sensors in general comprise an array of detection elements (so-called pixels), each implementing a thermocouple or hot-cold junction (for example, obtained with an N+ doped region and a P+ doped region), which are formed starting from a same substrate of semiconductor material, for example silicon, so that the "cold" junctions are at a known temperature.

In a known manner, a thermopile sensor detects a difference in temperature $\Delta T$ between the respective detection elements; in particular, when the sensor is heated by incident infrared radiation, a voltage $V_T = N\alpha\Delta T$ is generated as a result of the Seebeck effect, being proportional to the difference in temperature $\Delta T$ between the elements of the thermocouple, to the Seebeck coefficient $\alpha$ and to the number of thermocouples N.

Even though in general presence detection devices of a known type allow to achieve satisfactory performance, they have some drawbacks.

In particular, devices based on infrared temperature sensors are in general sensitive to environmental disturbance and to heating sources other than the individuals to be detected.

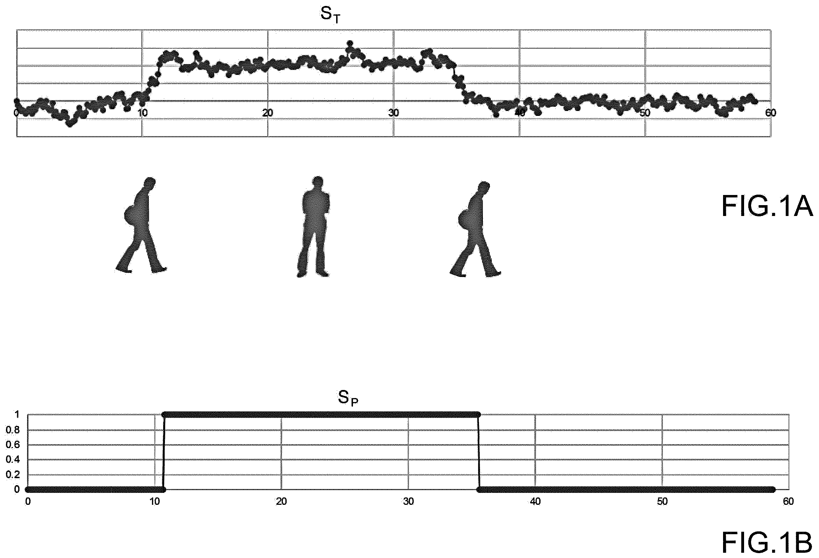

In this regard, Figure 1A shows the plot of a temperature signal $S_T$ supplied by an infrared temperature sensor, in particular a sensor based on a thermopile made with CMOS technology, indicative of a temperature detected in a monitored area.

In particular, in the presence of at least one individual within the monitored area, and as long as the same individual remains within the same area before coming out, the temperature signal $S_T$ assumes, as a result of the heat emitted by the body of the individual, a value considerably higher than a so-called baseline level (corresponding to the value of the temperature signal $S_T$ in the absence of individuals in the monitored area, substantially due to the environmental heat in the same monitored area).

Therefore, by evaluating the difference between the value of the temperature signal $S_T$ and the baseline level and comparing this difference with a threshold of an appropriate value, a presence signal $S_P$ is generated, represented in Figure 1B, which assumes a low value in the absence of individuals and a high value in the presence of at least one individual in the monitored area (this presence signal $S_p$ can then be used to cause, for example, generation of an anti-intrusion alarm).

In the presence of a larger number of individuals in the monitored area, the temperature signal $S_T$ assumes an even higher value with respect to the baseline level, with a relative increase proportional to the number of individuals present.

As mentioned previously, one drawback linked to this type of sensors is represented by the fact that the presence of a source of environmental heat that adds to the baseline level (for example, resulting from turning-on a radiator, stove, or similar heating element, in the case of domestic or indoor application) causes a significant variation in the temperature signal $S_T$, which may even be comparable with the variation associated with the presence of an individual, thus causing switching of the presence signal $S_p$ and a "false positive" in the presence detection.

It is known that a further drawback of devices based on infrared temperature sensors is represented by the fact that these devices are in general difficult to install and regulate.

In addition, systems based on microwave sensors are susceptible to the presence of objects made of metal material in the monitored area, which can act as a shield to the radiation emitted, creating "shadow areas" where detection is not possible. In general, minor movements, or even the presence of fluorescent light, are sufficient to cause generation of alarms (with a consequent possibility of false positives). Moreover, microwave sensors do not make a distinction between human beings and objects (for example, curtains, in indoor premises, or leaves or bushes in outdoor premises).

In general, in anti-intrusion systems, a further critical aspect is represented by the discrimination between pets and actual intruders; it is therefore possible for false alarms and consequent erroneous alarm signals to be generated.

KR 2011 0061750 A discloses a door opening/closing method and a door opening/closing transmitter using the same, which are provided to activate an infrared sensor selectively during operation time in case that there is an output from a contactless electrostatic sensor. A contactless electrostatic sensor outputs variation of electrostatic capacitance. The contactless electrostatic sensor outputs a human body sensing signal to a control part. The control part transmits a door open command to a door opening/closing driver using an RF transmitter. The control part activates an infrared sensor. The control part compares activation time with setting time of the infrared sensor. When the activation time exceeds the setting time, the control part outputs the door open command to the door opening/closing driver. When the activation time exceeds the setting time and the infrared sensor does not output a human body sensing signal, the control part closes a door.

EP 2 980 609 A1 relates to an electrostatic field sensor and a security system in interior spaces, which can measure electrostatic fields and the variations thereof along a metal conductor that acts as a detection probe or antenna. The probe is connected to an electronic circuit, which is able to decode said changes in the electrostatic field around the conductor, and to detect minuscule variations in the electrostatic field, by means of a processor, enabling the clear detection of a human presence in an area surrounding the antenna and the ability to differentiate between a human presence and any other type of animal or object.

EP 3 190 569 A1 discloses an access control system for use in restricted areas and industrial environments comprising at least one controlled electrostatic field sensor connected to at least one antenna; the antenna is configured as a single electrode, such that the sensor measures the disturbances in the electrostatic field around the antenna in a particular direction, and the controlled electrostatic field sensor is configured for detecting a disturbance in the electrostatic field generated by its own antenna.

US 4 833 450 A discloses an intrusion detection system employing a microwave subsystem and a passive infra-red subsystem. Both systems must produce an output signal indicative of an intrusion in order for the system to produce an alarm.

The aim of the present solution is to overcome the drawbacks of the known art by providing a presence detection system, in particular for anti-intrusion purposes, having improved characteristics.

According to the present solution, a presence detection device and method are provided, as defined in the annexed claims.

For a better understanding of the invention, embodiments thereof are now described purely by way of non-limiting example and with reference to the attached drawings, wherein:

- Figures 1A and 1B show plots of signals associated with presence detection in a presence detection system of a known type;
- Figure 2 is a schematic illustration of a detection device, according to one embodiment of the present solution;
- Figure 3 illustrates a possible embodiment of an electrostatic-charge-variation sensor of the detection device of Figure 2;
- Figure 4 illustrates a flowchart of a method implemented by the detection device of Figure 2, according to one embodiment of the present solution;
- Figure 5 shows a plot of an electrostatic-charge-variation signal associated with the detection of at least one individual in a monitored area; and
- Figure 6 is a general block diagram of an electronic apparatus in which the detection device of Figure 2 can be used.

As will be described in detail hereinafter, one aspect of the present solution envisages, for detecting the presence of one or more individuals within a monitored area, a detection device based on the joint, or combined, use of an infrared temperature sensor and of an electrostatic-charge-variation sensor.

In a known manner, the electric charge is a fundamental component of nature. The electric charge of an electrostatically charged body can be easily transferred to another body, in conditions of direct contact or at a distance. When the charge is transferred between two electrically insulated objects, a static charge is generated so that the object with an excess of electrons is negatively charged and the object with a deficit of electrons is positively charged. The displacement of charges is of a different nature, according to whether the object is a conductor or a dielectric. In a conductor, electrons are distributed throughout the material and are free to move, based on the influence of external electrical fields. In a dielectric, there are no electrons free to move, but electric dipoles, with random directions in space (therefore with a resulting zero net charge), which, however, can be oriented or deformed by means of an external electrical field, thus generating an orderly distribution of charges and therefore a polarization. The charge may in any case be mobile, according to the properties of the material and other environmental factors.

In the present solution, the electrostatic-charge-variation sensor of the detection device is configured to detect, via a capacitive detection, the variations of electrical field that arise as a result of the presence of an individual within a monitored area, due to transfer of charges from the body of the individual towards the ground.

In particular, the human body is conductive, and the electric charge is normally balanced; each step made by the individual generates an unbalancing in the electric charge of the body, thus causing a flow of charges, i.e., a current, for overall charge balancing. This electric current can therefore be detected (as described in detail hereinafter), for identifying the presence of the individual within the monitored area.

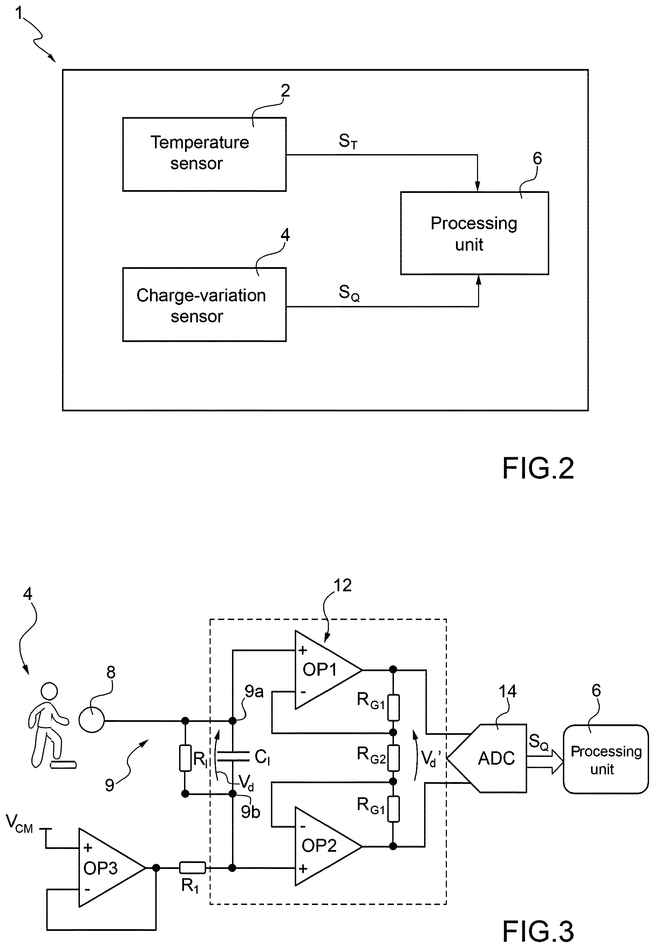

Figure 2 is a schematic illustration of a detection device 1 according to one embodiment of the present solution, which comprises:

an infrared temperature sensor 2, in particular a thermopile-based sensor made with CMOS technology, of a perse known type (not described in detail herein), configured to provide a temperature signal $S_T$, associated with the presence of an individual in a monitored area, as a function of the detected temperature (in particular, the variation of this temperature signal $S_T$ with respect to a baseline value may be used to generate a presence signal $S_P$, as discussed previously);

an electrostatic-charge-variation sensor 4, which will be described in detail hereinafter, configured to provide a charge-variation signal $S_Q$ indicative of a variation of electrostatic charge associated with the presence of the individual; and

a processing unit 6, which is coupled to the infrared temperature sensor 2 and to the electrostatic-charge-variation sensor 4 in order to receive the temperature signal $S_T$ and the charge-variation signal $S_Q$ and is configured to jointly process the aforesaid temperature signal $S_T$ and charge-variation signal $S_Q$ in order to detect the presence of at least one individual in the monitored area.

In particular, as on the other hand will be described in detail hereinafter, the processing unit 6 is configured to implement a "time AND" operation, in order to verify the simultaneous presence of a first and a second presence indication, provided on the basis of processing of the charge-variation signal $S_Q$ and of the temperature signal $S_T$, respectively.

In addition, the same processing unit 6 is configured to automatically adjust the baseline value of the temperature signal $S_T$ in a manner conditioned with respect to the processing of the charge-variation signal $S_Q$, in particular so as to enable updating of the baseline value only in the absence of individuals in the monitored area, so as to update it as a function of the actual environmental noise present in the same monitored area.

The processing unit 6 comprises, for example, a microcontroller, or a Machine Learning Core (MLC) processor resident in an Application-Specific Integrated Circuit (ASIC), coupled to the infrared temperature sensor 2 and to the electrostatic-charge-variation sensor 4 for processing the temperature signal $S_T$ and charge-variation signal $S_Q$. The aforesaid infrared temperature sensor 2, electrostatic-charge-variation sensor 4, and processing unit 6 may be made within a same package provided with appropriate electrical-connection elements towards the outside, for example for connection with a host electronic apparatus.

Figure 3 illustrates an embodiment provided by way of non-limiting example of the electrostatic-charge-variation sensor 4, which comprises at least one input electrode 8, which is designed to be arranged facing, or in proximity of, the monitored area.

The input electrode 8 forms part of a differential input 9 of an instrumentation amplifier 12, being coupled to a corresponding first input terminal 9a.

An input capacitor $C_I$ and an input resistor $R_I$ are connected in parallel between the first input terminal 9a and a second input terminal 9b of the differential input 9.

During operation, an input voltage $V_d$ across the input capacitor $C_I$ varies due to process of electrical charge/discharge through the body of the individual, in particular due to contact with the ground and the resulting electric current. After a transient (the duration of which is given by the constant $R_I \cdot C_I$ defined by the parallel between the capacitor $C_I$ and the resistor $R_I$), the input voltage $V_d$ returns to its steady-state value.

The instrumentation amplifier 12 is basically constituted by two operational amplifiers OP1 and OP2, having non-inverting input terminals connected, respectively, to the first and second input terminals 9a, 9b and inverting terminals connected together by means of a gain resistor $R_{G2}$.

A biasing (buffer) stage OP3 biases the instrumentation amplifier 12 to a common-mode voltage $V_{CM}$, through a resistor $R_1$ coupled to the second input terminal 9b.

The output terminals of the operational amplifiers OP1 and OP2 are connected to the respective inverting input terminals by means of a respective gain resistor $R_{G1}$; an output voltage $V_d'$ is present between the output terminals.

As will be evident, the gain Ad of the instrumentation amplifier 12 is equal to $(1+2\cdot R_1/R_2)$; therefore, the aforesaid output voltage $V_d'$ is equal to $V_d\cdot(1+2\cdot R_1/R_2)$.

The components of the instrumentation amplifier 12 are chosen so that the instrumentation amplifier 12 will have a low noise and a high impedance (for example, of the order of $10^9\,\Omega$) in its passband (for example, comprised between 0 and 500 Hz).

The aforesaid output voltage $V_d'$ is provided at the input of an analog-to-digital converter (ADC) 14, which provides at the output the aforesaid charge-variation signal $S_Q$ for the processing unit 6. The charge-variation signal $S_Q$ is, for example, a high-resolution (16 or 24 bits) digital stream.

According to a different embodiment, if an analog-to-digital converter 14 with appropriate characteristics (e.g., differential input, high input impedance, high resolution, dynamic range optimized for the quantities to be measured, low noise) is available, the instrumentation amplifier 12 can be omitted, the input voltage $V_d$ being in this case directly supplied to the input of the analog-to-digital converter 14.

In a way not illustrated, the charge-variation signal $S_Q$ can be supplied to a first input of a multiplexer block, which can moreover receive on at least one further input the aforesaid temperature signal $S_T$ (and possibly, on further inputs, further detection signals). The output of the multiplexer block is in this case coupled to an input of the processing unit 6, supplying, sequentially in time, the aforesaid charge-variation and temperature signals $S_Q$, $S_T$ (and possibly further detection signals) for joint processing by the same processing unit 6.

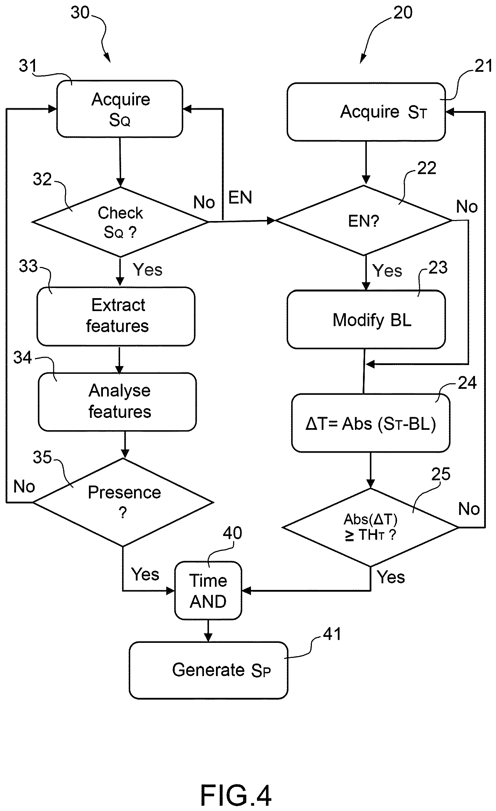

Figure 4 illustrates, as a flowchart, the operations of joint processing of the charge-variation and temperature-variation signals $S_Q$, $S_T$ carried out by the processing unit 6, in a possible embodiment of the present solution.

In particular, as will be in any case highlighted hereinafter, the processing unit 6 is configured to carry out in parallel (i.e., in a way substantially simultaneous over time) two distinct processing branches, a first processing branch 20 and a second processing branch 30, respectively for processing the temperature signal $S_T$ and the charge-variation signal $S_Q$ (in the embodiment described, both signals being of a digital type), to detect the presence of at least one individual in the monitored area, on the basis, in combination, of the results supplied by the aforesaid processing branches.

The processing branches 20, 30 are executed continuously over time, within a respective cyclic loop.

In detail, the first processing branch 20 envisages, in an initial step (block 21), acquisition of a new value or sample (or of a set of values or samples) of the temperature signal $S_T$.

Next, at block 22, an update of a baseline value BL of the temperature signal $S_T$ is enabled (or not enabled), as a function of, and in a way conditioned to, an enable signal EN received from the second processing branch 30. As will be described in detail hereinafter, the value of this enable signal EN is indicative of the presence, or absence, of individuals in the monitored area, as determined from the processing of the charge-variation signal $S_Q$.

In particular, in the case where updating is enabled (in the absence of individuals in the monitored area), at block 23, the baseline value BL is updated, in a per se known manner, for example by updating of a moving-window average or by implementation of an appropriate filter, for example of a low-pass type with a suitable time constant, designed to supply at the output the aforesaid baseline value BL.

Updating of the baseline value BL enables automatic adjustment of the temperature detection made by the infrared temperature sensor 2 to the environmental conditions and to the possible variations thereof (for example, on account of turning-on or activation of an external heat source or of any other source of noise). In particular, given that the aforesaid enable signal EN is indicative of the absence of individuals in the monitored area, updating of the baseline value BL can be carried out in an optimized way with dedicated operations, for example as regards the speed of response of the aforesaid moving average and/or filtering operations, without problems of interference with the possible detection of presence of individuals in the same monitored area.

Then, at block 24, the value of a temperature difference (or gradient) $\Delta T$ is calculated as the difference, in absolute value, between the value of the temperature signal $S_T$ and the aforesaid baseline value BL (possibly appropriately updated, as discussed previously).

As represented by block 25, this temperature gradient $\Delta T$ is compared, in absolute value, with a temperature threshold $TH_T$, of a pre-set value, indicative of the variation of the temperature signal $S_T$ associated with the presence of at least one individual in the monitored area (the value of this temperature threshold $TH_T$ can be determined beforehand or in an initial characterization step).

If the temperature gradient $\Delta T$ is, in absolute value, lower than the temperature threshold $TH_T$, processing returns to block 21, to calculate a new value of the same temperature gradient (considering the subsequent value, or a set of subsequent values, of the temperature signal $S_T$).

If, instead, the temperature gradient $\Delta T$ is, in absolute value, equal to or higher than the temperature threshold $TH_T$, the first processing branch 20 provides a first presence indication, indicative of the presence of at least one user in the monitored area.

In parallel, the second processing branch, designated by 30, envisages, as represented by block 31, continuously over time within a respective cyclic loop, acquisition and processing of the charge-variation signal $S_Q$ (possibly preliminarily subjected to appropriate filtering actions).

In particular, at block 32, firstly a preliminary check of the charge-variation signal $S_Q$ is carried out in order to identify a significant variation thereof with respect to a reference (or baseline) value.

In one embodiment, this preliminary check can be carried out by means of a comparison of the charge-variation signal $S_Q$ with a charge threshold $Th_Q$. This charge threshold $Th_Q$ may be fixed and pre-set, or, alternatively, may be of an adaptive type, i.e., variable as a function of the evolution of the charge-variation signal $S_Q$. Calculation of the charge threshold $Th_Q$ of an adaptive type can be carried out by exploiting techniques known in the art; for example, it is possible to use sliding time windows or overlapping time windows, or again other techniques for real-time adaptive-threshold calculation.

In a possible embodiment, the charge threshold $Th_Q$ can be chosen as the average of the charge-variation signal $S_Q$ (in the time window considered) plus a multiple of the standard deviation of the same charge-variation signal $S_Q$ (in the same window considered):

$$Th_Q = mean(S_Q) + n \cdot stddev(S_Q),$$

with "n" chosen in the range between 2 and 6, for example 4 (where "mean" is the operation of arithmetic mean, and "stddev" is the operation of standard deviation). The time window is chosen with an appropriate value, according to the type of application; the Applicant has found that values compatible with processing on a microcontroller (i.e., taking into account the buffer, the memory used, and the calculation resources), can range from 2 to 10 seconds.

If the preliminary check on the charge-variation signal $S_Q$ does not lead to identification of a significant variation, processing returns to block 31, for a new processing cycle of the charge-variation signal $S_Q$.

In addition, once again in the case where the aforesaid significant variation of the charge-variation signal $S_Q$ is not identified, the enable signal EN (for example, of a high value) is provided to the first processing branch 20 (at block 22) to enable modification and automatic updating of the baseline value of the temperature signal $S_T$ (as previously discussed).

If, instead, the aforesaid significant variation of the charge-variation signal $S_Q$ is identified, the aforesaid automatic updating of the baseline value of the temperature signal $S_T$ is disabled (the enable signal switches, for example, to the low value) and a further and more in-depth analysis of the charge-variation signal $S_Q$ is carried out in order to verify the presence of features that are indicative of the presence of at least one individual in the monitored area.

This further analysis may envisage, in a simpler embodiment (and one that is less burdensome from the computational standpoint) identification of (positive and/or negative) peaks in the evolution of the charge-variation signal $S_Q$ with respect to a reference value, due to the transfer of electrostatic charges from or towards the ground as a result of the presence of the individual in the monitored area.

As will be highlighted also hereinafter, the Applicant has in fact verified the possibility of identifying peaks in the charge-variation signal $S_Q$ at each step made by the individual, as a result of the aforesaid transfer of charges from the body of the individual from or towards the ground.

In a different embodiment, illustrated in the aforesaid Figure 4, which is more burdensome from the computational standpoint but ensures a better accuracy in the step detection, the aforesaid further analysis of the charge-variation signal $S_Q$ can be carried out by means of a dual step of extraction of significant features of the charge-variation signal $S_Q$, block 33, and of analysis of the features extracted, block 34.

The aforesaid significant features characterize the evolution of the charge-variation signal $S_Q$, for example of a corresponding envelope, and may be identified and detected via processing of the same charge-variation signal $S_Q$. Advantageously, to carry out the aforesaid operations of feature extraction and analysis it is possible to use automatic-learning artificial-intelligence algorithms of the so-called machine-learning type, appropriately trained, for example by means of neural networks, SVMs, Bayesian networks, etc.

In any case, on the basis of the aforesaid further analysis, the presence, or absence, in the charge-variation signal $S_Q$, of features indicative of the presence of at least one individual is verified, at block 35.

If the features are not present, a subsequent cycle of processing of the charge-variation signal $S_Q$ is envisaged (in the example, the process returns to the aforesaid block 31) .

If the features are present, a second presence indication is provided, regarding the presence of at least one individual in the monitored area.

Next, at block 40, processing envisages verifying the simultaneous presence, i.e., the presence substantially at the same instant or time interval, of the aforesaid first and second indications, in order to validate (in the case of positive verification of the simultaneous presence) the detection of the presence of at least one individual in the monitored area. In other words, in block 40 an operation of (time) AND is carried out between the first and second presence indications, thus reinforcing the presence indication supplied, individually, by the infrared temperature sensor 2 and by the charge-variation sensor 4.

It is highlighted that the aforesaid operation of time AND may, for example, be performed as described in the Italian patent application 102020000001603 filed on 28/01/2020 in the name of the present Applicant.

It is moreover highlighted that a certain delay (for example, of the order of some tens of milliseconds) between the two detections of the first and second indications is in any case acceptable, given that it falls within the normal delay of generation, acquisition and processing of the two signals (by means of operations carried out with procedures different from one another).

In the case where the simultaneous presence of the first and second indications is verified, the process passes from block 40 to block 41, where a presence signal $S_P$ is generated at the output, indicative of the detected presence of at least one individual in the monitored area. The presence signal $S_P$ may, in particular, be a signal that assumes a first value (for example, a high value) throughout the time interval within which at least one individual enters, and remains within, the monitored area.

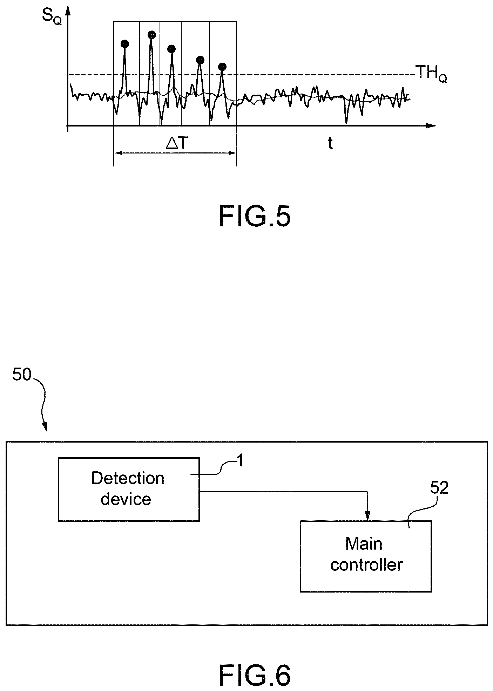

Figure 5 shows the evolution of the charge-variation signal $S_Q$ during a series of steps made by an individual within the monitored area, occurring, as illustrated schematically, in the time interval identified by $\Delta T$. In particular, it is evident that, for each step a peak (indicated by a dot) and moreover a characteristic evolution (indicated by a rectangular box) occur in the charge-variation signal $S_Q$, which can therefore be identified by means of processing of the signal by the processing unit 6.

Figure 5 also indicates the charge threshold $Th_Q$, which is, for example, calculated in an adaptive manner with respect to the evolution of the charge-variation signal $S_Q$, in particular with respect to a baseline value of the charge-variation signal $S_Q$ (which is also represented in Figure 5); the peaks are therefore referenced in this case to the aforesaid charge threshold $Th_Q$.

It is moreover evident that, outside the aforesaid time interval $\Delta T$, i.e., in the absence of individuals within the monitored area, the charge-variation signal $S_Q$ has significantly different features, and in particular an amplitude lower than the charge threshold $Th_Q$. In this time interval, as discussed previously, updating of the baseline value of the temperature signal $S_T$ is therefore enabled.

Figure 6 is a schematic illustration of an electronic apparatus 50 that includes the detection device 1 described previously.

The electronic apparatus 50 comprises a main controller 52 (a microcontroller, a microprocessor, or a similar digital processing unit), coupled to the processing unit 6 of the detection device 1 in order to receive the information regarding the presence of at least one individual in the monitored area.

In the embodiment described previously, the main controller 52 receives from the processing unit 6 of the detection device 1 the presence signal $S_P$, for example in order to activate an appropriate anti-intrusion alarm (or serving other purposes, for example for energy saving, or for domestic or industrial automation).

The advantages achieved by the present solution emerge clearly from the foregoing description.

In any case, it is again underlined that, in the detection device 1, monitoring of the charge variation allows to reinforce the information associated with the sole temperature detection made by the infrared temperature sensor.

The detection device 1 enables a performance optimization (in particular, reducing the number of false detections, i.e., false positives and false negatives, due to the presence of noise due to heat sources or electrostatic charges in the environment), with an optimized energy consumption and a small occupation of space (in particular, with the possibility of integration in a single package of both detection technologies, namely, the temperature detection and the charge-variation detection).

As described previously, it is advantageous the possibility to use the presence indication provided by processing of the charge-variation signal $S_Q$ for enabling, or not, updating of the baseline value BL of the temperature signal $S_T$ so as to eliminate (or markedly reduce) the false detections associated with environmental noise.

In addition, advantageously, processing of the features of the charge-variation signal $S_Q$ enables discrimination with a high reliability of the presence of individuals or pets within the monitored area. In particular, the presence of pets does not generally lead to generation of the second presence indication by the second processing branch 30; at most, the presence of pets can lead to generation of a signal with smaller amplitude (which therefore can be filtered out with a sufficiently high threshold) or with features that are different, as regards shape and frequency, from those associated with the detection of human presence.

Finally, modifications and variations may be applied to the present solution, without thereby departing from the scope specified in the claims.

In particular, in a way not illustrated, appropriate filtering operations may be envisaged (for example, using low-pass or high-pass filters) for the temperature and charge-variation signals $S_T$, $S_Q$, preliminary to the processing operations described. This filtering may have the function of "cleaning-up" the temperature and charge-variation signals $S_T$ and $S_Q$ from noise or components of disturbance at non-significant frequencies (e.g., around 50 Hz or 60 Hz for the charge-variation signal $S_Q$). It is moreover possible to carry out a frequency analysis (e.g., by means of Fast Fourier Transform - FFT) of the charge-variation signal $S_Q$ in order to identify the features thereof for recognising whether the individual is going upstairs or downstairs and the relative number of steps.

In a way not illustrated, the detection device 1 can integrate further sensors and envisage further processing channels dedicated to other detections.

Moreover, in one embodiment, the charge-variation sensor 4 may be arranged in a manner delocalized with respect to the temperature sensor 2. In this case, the detection device 1 is not integrated within a single package, and, for example, a wireless communication may be envisaged between the control unit 6 and the charge-variation sensor 4.

The above embodiment may be advantageous, for example, for orienting the monitoring area of the charge-variation sensor 4 in a specific way towards known sources of disturbance (for example, constituted by heat sources, whose switching-on could be interpreted as the presence of an individual in the monitored area).

Furthermore, it is underlined that the detection device 1 may comprise a different sensor for providing the temperature-variation signal used in combination with the charge-variation signal for presence detection, for example, an infrared temperature sensor of an active type.

**Claims**

1. A detection device (1), comprising:

   an infrared temperature sensor (2), configured to provide a temperature signal ($S_T$) associated with an heat emission of at least one individual within a monitored area;
   an electrostatic-charge-variation sensor (4), configured to provide a charge-variation signal ($S_Q$) indicative of a variation of electrostatic charge associated with said at least one individual; and
   a processing unit (6), coupled to the infrared temperature sensor (2) and to the electrostatic-charge-variation sensor (4) to receive the temperature signal ($S_T$) and the charge-variation signal ($S_Q$) and configured to carry out joint processing of said temperature signal ($S_T$) and charge-variation signal ($S_Q$) in order to detect the presence of said at least one individual within said monitored area,
   wherein said processing unit (6) is configured to: process a temperature gradient ($\Delta T$) associated with a variation of said temperature signal ($S_T$) with respect to a baseline value (BL) in order to detect a first presence indication; process a variation over time of said charge-variation signal ($S_Q$) in order to detect a second presence indication; and generate a presence signal ($S_P$) indicative of the presence of said at least one individual within said monitored area in the case of joint detection of said first and second presence indications in a same time interval;
   **characterized in that** said processing unit (6) is configured to enable updating of the baseline value (BL) of said temperature signal ($S_T$) for automatically adapting the detection to conditions of ambient temperature of said monitored area, conditionally with respect to the processing of said charge-variation signal ($S_Q$), only in the case where processing of the charge-variation signal ($S_Q$) over time is indicative of the absence of individuals in the monitored area.

2. The device according to claim 1, wherein said first presence indication is detected in the case where said temperature gradient ($\Delta T$) exceeds, in absolute value, a temperature threshold ($TH_T$); and said second presence indication is detected in the case of detection of features of the charge-variation signal ($S_Q$) associated with at least one step made by said at least one individual.

3. The device according to claim 2, wherein said detection of features of the charge-variation signal ($S_Q$) includes: analysis of amplitude peaks of said charge-variation signal ($S_Q$) exceeding a fixed or adaptive charge threshold ($TH_Q$); and/or analysis of specific patterns of the charge-variation signal ($S_Q$).

4. The device according to any of the preceding claims, wherein said processing unit (6) is configured to enable updating of the baseline value (BL) of said temperature signal ($S_T$) in the case where said charge-variation signal ($S_Q$) does not have a significant variation with respect to a reference value.

5. The device according to any one of the preceding claims, wherein said electrostatic-charge-variation sensor (4) comprises at least one electrode (8) that is designed to be arranged facing said monitored area; a high-impedance instrumentation amplifier (12) having an input coupled to said electrode (8); and an analog-to-digital converter (14) coupled at an output of said instrumentation amplifier (12) for providing said charge-variation signal ($S_Q$).

6. The device according to any one of the preceding claims, wherein said processing unit (6), said infrared temperature sensor (2), and said electrostatic-charge-variation sensor (4) are integrated within a same package having electrical-connection elements towards the outside.

7. An electronic apparatus (50), comprising a detection device (1) according to any one of the preceding claims and a main controller (52) coupled to the processing unit (6) of the detection device (1) in order to receive a presence signal ($S_P$) indicative of the presence of said at least one individual within said monitored area.

8. The apparatus according to claim 7, wherein said main controller (52) is configured to activate an anti-intrusion alarm as a function of said presence signal ($S_P$).

9. A method for detecting the presence of at least one individual within a monitored area, comprising:

   providing, by an infrared temperature sensor (2), a temperature signal ($S_T$) associated with a heat emission of at least one individual within a monitored area;
   providing, by an electrostatic-charge-variation sensor (4), a charge-variation signal ($S_Q$) indicative of a variation of electrostatic charge associated with said at least one individual; and
   jointly processing said temperature signal ($S_T$) and said charge-variation signal ($S_Q$) for detecting the presence of said at least one individual within said monitored area,
   wherein joint processing comprises:

   processing a temperature gradient ($\Delta T$) as-

sociated with a variation of said temperature signal ($S_T$) with respect to a baseline value (BL) for detecting a first presence indication; processing a variation of said charge-variation signal ($S_Q$) over time for detecting a second presence indication; and generating a presence signal ($S_P$) indicative of the presence of said at least one individual within said monitored area in the case of joint detection of said first and second presence indications in a same time interval;

**characterized by** comprising enabling updating of the baseline value (BL) of said temperature signal ($S_T$) for automatic adaptation of the detection to conditions of ambient temperature of said monitored area, conditionally with respect to processing of said charge-variation signal ($S_Q$), only in the case where processing of the charge-variation signal ($S_Q$) is indicative of the absence of individuals in the monitored area.

10. The method according to claim 9, comprising enabling updating of the baseline value (BL) of said temperature signal ($S_T$) in the case where said charge-variation signal ($S_Q$) does not have a significant variation with respect to a reference value.


**Patentansprüche**

1. Feststellungsvorrichtung (1), umfassend:

Einen Infrarot-Temperatursensor (2), der so konfiguriert ist, dass er ein Temperatursignal ($S_T$) bereitstellt, das mit einer Wärmeabgabe von mindestens einer Person in einem überwachten Bereich verbunden ist; einen Sensor (4) für elektrostatische Ladungsvariation, der so konfiguriert ist, dass er ein Ladungsvariationssignal ($S_Q$) bereitstellt, das eine Variation der elektrostatischen Ladung anzeigt, die mit der mindestens einen Person verbunden ist; und eine Verarbeitungseinheit (6), die mit dem Infrarot-Temperatursensor (2) und dem elektrostatischen Ladungsveränderungssensor (4) gekoppelt ist, um das Temperatursignal ($S_T$) und das Ladungsveränderungssignal ($S_Q$) zu empfangen, und die so konfiguriert ist, dass sie eine gemeinsame Verarbeitung des Temperatursignals ($S_T$) und des Ladungsveränderungssignals ($S_Q$) durchführt, um die Anwesenheit der mindestens einen Person in dem überwachten Bereich festzustellen, wobei die Verarbeitungseinheit (6) konfiguriert ist, um: einen Temperaturgradienten (ΔT) zu verarbeiten, der mit einer Variation des genannten Temperatursignals ($S_T$) in Bezug auf einen Basiswert (BL) verbunden ist, um eine erste Anwesenheitsanzeige festzustellen; eine Variation über die Zeit des Ladungsvariationssignals ($S_Q$) zu verarbeiten, um eine zweite Anwesenheitsanzeige festzustellen; und ein Anwesenheitssignal ($S_P$) zu erzeugen, das die Anwesenheit der mindestens einen Person in dem überwachten Bereich anzeigt, wenn die erste und die zweite Anwesenheitsanzeige in demselben Zeitintervall gemeinsam festgestellt werden;

**dadurch gekennzeichnet, dass** die Verarbeitungseinheit (6) so konfiguriert ist, dass sie die Aktualisierung des Basiswerts (BL) des Temperatursignals ($S_T$) zur automatischen Anpassung der Feststellung an die Bedingungen der Umgebungstemperatur des feststellbaren Bereichs ermöglicht, bedingt durch die Verarbeitung des Ladungsvariationssignals ($S_Q$), nur in dem Fall, in dem die Verarbeitung des Ladungsvariationssignals ($S_Q$) über die Zeit auf das Fehlen von Personen im feststellbaren Bereich hinweist.

2. Vorrichtung nach Anspruch 1, wobei die erste Anwesenheitsanzeige festgestellt wird, wenn der Temperaturgradient (ΔT) im Absolutwert einen Temperaturschwellenwert ($TH_T$) überschreitet; und die zweite Anwesenheitsanzeige wird festgestellt, wenn Merkmale des Ladungsvariationssignals ($S_Q$) festgestellt werden, die mit mindestens einem von der mindestens einen Person ausgeführten Schritt verbunden sind.

3. Vorrichtung nach Anspruch 2, wobei die Feststellung von Merkmalen des Ladungsvariationssignals ($S_Q$) Folgendes einschließt: Analyse der Amplitudenspitzen des Ladungsvariationssignals ($S_Q$), die eine feste oder eingerichtete Ladungsschwelle ($TH_Q$) überschreiten; und/oder die Analyse bestimmter Muster des Ladungsvariationssignals ($S_Q$).

4. Vorrichtung nach einem der vorstehenden Ansprüche, wobei die Verarbeitungseinheit (6) so konfiguriert ist, dass sie eine Aktualisierung des Basiswerts (BL) des Temperatursignals ($S_T$) für den Fall ermöglicht, dass das Ladungsvariationssignal ($S_Q$) keine signifikante Variation in Bezug auf einen Referenzwert aufweist.

5. Vorrichtung nach einem der vorstehenden Ansprüche, wobei der Sensor (4) für elektrostatische Ladungsvariation mindestens eine Elektrode (8) umfasst, die so gestaltet ist, dass sie dem überwachten Bereich zugewandt ist; einen hochohmigen Instrumentenverstärker (12), der einen mit der Elektrode (8) gekoppelten Eingang aufweist; und einen Analog-Digital-Wandler (14), der an einen Ausgang des Instrumentenverstärkers (12) gekoppelt ist, um das Ladungsvariationssignal ($S_Q$) bereitzustellen.

6. Vorrichtung nach einem der vorstehenden Ansprüche, wobei die Verarbeitungsvorrichtung (6), der Infrarot-Temperatursensor (2) und der Sensor (4) für elektrostatische Ladungsvariationen in einem gemeinsamen Gehäuse integriert sind, das nach außen hin elektrische Verbindungselemente aufweist.

7. Elektronisches Gerät (50), das eine Feststellungsvorrichtung (1) nach einem der vorstehenden Ansprüche und eine Hauptsteuerung (52) umfasst, die mit der Verarbeitungseinheit (6) der Feststellungsvorrichtung (1) gekoppelt ist, um ein Erkennungssignal ($S_P$) zu empfangen, das die Anwesenheit der mindestens einen Person in dem überwachten Bereich anzeigt.

8. Gerät nach Anspruch 7, wobei die Hauptsteuerung (52) so konfiguriert ist, dass sie in Abhängigkeit von dem Anwesenheitssignal ($S_P$) einen Einbruchschutzalarm aktiviert.

9. Verfahren zum Feststellen der Anwesenheit von mindestens einer Person in einem überwachten Bereich, umfassend:

   Bereitstellen eines Temperatursignals ($S_T$) durch einen Infrarot-Temperatursensor (2), das mit einer Wärmeabgabe von mindestens einer Person in einem überwachten Bereich verbunden ist;
   Bereitstellen eines Ladungsvariationssignals ($S_Q$) durch einen Sensor (4) für elektrostatische Ladungsvariationen, das eine Variation der elektrostatischen Ladung anzeigt, die mit der mindestens einen Person verbunden ist; und
   gemeinsames Verarbeiten des Temperatursignals ($S_T$) und des Ladungsvariationssignals ($S_Q$), um die Anwesenheit der mindestens einen Person in dem überwachten Bereich festzustellen,
   wobei die gemeinsame Verarbeitung Folgendes umfasst:

   Verarbeiten eines Temperaturgradienten ($\Delta T$), der mit einer Variation des Temperatursignals ($S_T$) in Bezug auf einen Basislinienwert (BL) verbunden ist, um eine erste Anwesenheitsanzeige festzustellen;
   Verarbeiten einer Variation des Ladungsvariationssignals ($S_Q$) über die Zeit zum Feststellen einer zweiten Anwesenheitsanzeige; und
   Erzeugen eines Anwesenheitssignals ($S_P$), das die Anwesenheit der mindestens einen Person in dem überwachten Bereich anzeigt, wenn die erste und die zweite Anwesenheitsanzeige in demselben Zeitintervall gemeinsam festgestellt werden;
   **dadurch gekennzeichnet, dass** es das Ermöglichen des Aktualisierens des Basiswerts (BL) des Temperatursignals ($S_T$) zur automatischen Anpassung der Feststellung an die Bedingungen der Umgebungstemperatur des feststellbaren Bereichs umfasst, bedingt in Bezug auf die Verarbeitung des Ladungsvariationssignals ($S_Q$), nur in dem Fall, in dem die Verarbeitung des Ladungsvariationssignals ($S_Q$) das Fehlen von Individuen in dem feststellbaren Bereich anzeigt.

10. Verfahren nach Anspruch 9, umfassend das Ermöglichen der Aktualisierung des Basiswerts (BL) des Temperatursignals ($S_T$) für den Fall, dass das Ladungsvariationssignal ($S_Q$) keine signifikante Variation in Bezug auf einen Referenzwert aufweist.

**Revendications**

1. Dispositif de détection (1), comprenant :

   un capteur de température infrarouge (2), configuré pour fournir un signal de température ($S_T$) associé à une émission de chaleur d'au moins un individu dans une zone contrôlée ;
   un capteur de variation de charge électrostatique (4), configuré pour fournir un signal de variation de charge ($S_Q$) indicatif d'une variation de charge électrostatique associée audit au moins un individu ; et
   une unité de traitement (6), couplée au capteur de température infrarouge (2) et au capteur de variation de charge électrostatique (4) pour recevoir le signal de température ($S_T$) et le signal de variation de charge ($S_Q$) et configurée pour réaliser un traitement joint dudit signal de température ($S_T$) et dudit signal de variation de charge ($S_Q$) afin de détecter la présence dudit au moins un individu dans ladite zone contrôlée, dans lequel ladite unité de traitement (6) est configurée pour : traiter un gradient de température ($\Delta T$) associé à une variation dudit signal de température ($S_T$) par rapport à une valeur de base (BL) afin de détecter une première indication de présence ; traiter une variation dans le temps dudit signal de variation de charge ($S_Q$) afin de détecter une seconde indication de présence ; et générer un signal de présence ($S_P$) indicatif de la présence dudit au moins un individu dans ladite zone contrôlée dans le cas de la détection jointe desdites première et seconde indications de présence dans un même intervalle de temps ; **caractérisé en ce que** ladite unité de traitement (6) est configurée pour permettre de mettre à jour la valeur de base (BL) dudit signal de température ($S_T$) pour adapter automatiquement la détection aux conditions de température ambiante de ladite zone contrôlée, conditionnellement par rapport au traitement dudit signal de variation de charge ($S_Q$), seulement dans le cas où le traitement du signal de variation de charge ($S_Q$) avec le temps est indicatif de l'absence d'individus dans la zone contrôlée.

2. Dispositif selon la revendication 1, dans lequel ladite première indication de présence est détectée dans le cas où ledit gradient de température ($\Delta T$) dépasse, en valeur absolue, un seuil de température ($TH_T$) ; et ladite seconde indication de présence est détectée dans le cas de la détection de caractéristiques du signal de variation de charge ($S_Q$) associées à au moins un pas fait par ledit au moins un individu.

3. Dispositif selon la revendication 2, dans lequel ladite détection de caractéristiques du signal de variation de charge ($S_Q$) inclut ; l'analyse de pics d'amplitude dudit signal de variation de charge ($S_Q$) dépassant un seuil de charge ($TH_Q$) fixe ou adaptatif ; et/ou l'analyse de motifs spécifiques du signal de variation de charge ($S_Q$).

4. Dispositif selon l'une quelconque des revendications précédentes, dans lequel ladite unité de traitement (6) est configurée pour permettre de mettre à jour la valeur de base (BL) dudit signal de température ($S_T$) dans le cas où ledit signal de variation de charge ($S_Q$) ne présente pas de variation significative par rapport à une valeur de référence.

5. Dispositif selon l'une quelconque des revendications précédentes, dans lequel ledit capteur de variation de charge électrostatique (4) comprend au moins une électrode (8) qui est conçue pour être agencée face à ladite zone contrôlée ; un amplificateur d'instrumentation à haute impédance (12) ayant une entrée couplée à ladite électrode (8) ; et un convertisseur analogique vers numérique (14) couplé à une sortie dudit amplificateur d'instrumentation (12) pour fournir ledit signal de variation de charge ($S_Q$).

6. Dispositif selon l'une quelconque des revendications précédentes, dans lequel ladite unité de traitement (6), ledit capteur de température infrarouge (2), et ledit capteur de variation de charge électrostatique (4) sont intégrés dans un même ensemble comportant des éléments de connexion électriques vers l'extérieur.

7. Appareil électronique (50), comprenant un dispositif de détection (1) selon l'une quelconque des revendications précédentes et une commande principale (52) couplée à l'unité de traitement (6) du dispositif de détection (1) afin de recevoir un signal de présence ($S_P$) indicatif de la présence dudit au moins un individu dans ladite zone contrôlée.

8. Appareil selon la revendication 7, dans lequel ladite commande principale (52) est configurée pour activer une alarme anti-intrusion en fonction dudit signal de présence ($S_P$).

9. Procédé pour détecter la présence d'au moins un individu dans une zone contrôlée, comprenant :

de fournir, par un capteur de température infrarouge (2) un signal de température ($S_T$) associé à une émission de chaleur d'au moins un individu dans une zone contrôlée ; de fournir, par un capteur de variation de charge électrostatique (4), un signal de variation de charge ($S_Q$) indicatif d'une variation de charge électrostatique associée audit au moins un individu ; et de traiter de manière jointe ledit signal de température ($S_T$) et ledit signal de variation de charge ($S_Q$) pour détecter la présence dudit au moins un individu dans ladite zone contrôlée, dans lequel ledit traitement joint comprend :

de traiter un gradient de température ($\Delta T$) associé à une variation dudit signal de température ($S_T$) par rapport à une valeur de base (BL) afin de détecter une première indication de présence ; de traiter une variation dans le temps dudit signal de variation de charge ($S_Q$) afin de détecter une seconde indication de présence ; et de générer un signal de présence ($S_P$) indicatif de la présence dudit au moins un individu dans ladite zone contrôlée dans le cas d'une détection jointe desdites première et seconde indications de présence dans un même intervalle de temps ; **caractérisé en ce qu'**il comprend de permettre de mettre à jour de la valeur de base (BL) dudit signal de température ($S_T$) pour adapter automatiquement la détection aux conditions de température ambiante de ladite zone contrôlée, conditionnellement par rapport au traitement dudit signal de variation de charge ($S_Q$), seulement dans le cas où le traitement du signal de variation de charge ($S_Q$) avec le temps est indicatif de l'absence d'individus dans la zone contrôlée.

**10.** Procédé selon la revendication 9, comprenant de permettre la mise à jour de la valeur de base (BL) dudit signal de température ($S_T$) dans le cas où ledit signal de variation de charge ($S_Q$) ne présente pas de variation significative par rapport à une valeur de référence.

$S_T$

FIG.1A

$S_P$

FIG.1B

FIG.2

FIG.3

FIG.4

FIG.5

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6188318 B1
- US 2005231353 A1
- KR 20110061750 A
- EP 2980609 A1
- EP 3190569 A1
- US 4833450 A
- IT 102020000001603